Europäisches Patentamt

European Patent Office

Office européen des brevets

(11) Publication number: **0 229 883**
A2

# EUROPEAN PATENT APPLICATION

(21) Application number: 86113745.3

(51) Int. Cl.⁴: **F 16 G 11/00**

(22) Date of filing: 03.10.86

(30) Priority: 13.01.86 US 818225

(43) Date of publication of application: 29.07.87
Bulletin 87/31

(84) Designated Contracting States: DE ES FR GB IT SE

(71) Applicant: American Cord & Webbing Co., Inc.,
505 Eighth Avenue, New York, N.Y. 10018 (US)

(72) Inventor: Krauss, Mark J., Kennedy Bldg 110-11 Queens
Boulevard 27th Floor, Forest Hills, N.Y. 11375 (US)

(74) Representative: Gudel, Diether, Dr. et al, Patentanwälte
Dr. V. Schmied-Kowarzik Dipl.-Ing. G. Dannenberg Dr. P.
Weinhold Dr. D. Gudel Dipl.-Ing. S. Schubert Dr. P. Barz
Grosse Eschenheimer Strasse 39, D-6000 Frankfurt am
Main 1 (DE)

(54) Improved cord lock.

(57) A cord lock is formed of only two parts, namely a
one-piece housing and a one-piece resilient plastic plunger
integrally formed with a coiled spring. The plunger and
housing are formed with cross bores which are aligned
when the plunger is depressed to receive a cord there-
through, and are misaligned with release of the plunger to
lock the cord therebetween. The cord lock is of minimal part
construction and reduced weight with increased spring
strength for comparably sized cord locks.

## Field of the Invention

The invention relates to cord locks.

## Background of the Invention and Discussion of the prior art

There is a need in various fields of endeavour for providing an adjustable termination to a cord or the like. Cord locks have been developed for this purpose which include telescoping cylinders having lateral apertures urged apart by a spring. The cylinders are manually urged toward one another against the force of the biasing spring to align the apertures, whereby the cord, which is smaller than the apertures, can be freely drawn through the lock, or conversely the lock may be moved along the cord. When the cylinders are released, the spring causes opposing edges of the apertures in the cylinders to clamp the cord.

Such cord locks initially were made of metal, and presented many disadvantages. Cord locks are often used in camping, backpacking, adjustment of parkas, and in aquatic operations. Thus, there is a considerable tendency toward corrosion and eventually inoperativeness of metal cord locks. Furthermore, such metal cord locks present sharp edges which tend to cut through the cord. In addition, there is nothing but the cord holding the parts together against the action of the spring, and if the cord is cut through, or if it is pulled entirely through the cord lock, the parts may separate rather rapidly.

In the patent to Hutchison et al, U.S. Pat No.4,328,605, the parts, except for the spring, are made of plastic, thereby minimizing problems of corrosion and somewhat improving the situation as to cutting through of the cord or the like. In that patent, it was still found necessary to utilize a four-piece (including the spring) construction with the end of one of the cylinders being frictionally held in place, augmented by sonic or solvent welding or cementing. This end piece, being initially separate, requires a discrete part to be handled during assembly, and leaves the possibility of inadvertent separation while in use.

The patent to Bakker, U.S. 4,453,292, further reduced the number of operable parts to a three-piece construction, namely a plastic cylinder, a plastic piston, and a metal spring physically attached to a special cruciform portion for holding the spring to the piston. While the number of operable parts was reduced from four to three, the presence of the metal spring and its interface in the assembly remained construction disadvantages.

An attempt to provide a two-piece all-plastic cord lock is disclosed in U.K. Patent Application No. 2 131 868A published June 27, 1984. That publication disclosed a box-like construction molded plunger having an integral spring of a zig-zag design. The molded plastic spring had to be of an exceptionally extended length in an effort to achieve a sufficient cord gripping force, which force was normally attendant a metal spring in prior art constructions. The mass attributable to the zig-zag spring portion was exceptional, particularly so in view of the limited cord gripping force which was achieved.

Objects and Summary of the Invention

It is a principal object of the present invention to provide a two-piece plastic cord lock.

It is another object of the present invention to provide a cord lock as aforesaid which is entirely of molded plastic construction.

It is a further object of the present invention to provide an all-plastic cord lock as aforesaid which yet has improved spring characteristics.

It is still a further object of the present invention to provide an entirely non-corrosive cord lock.

It is still a further object of the present invention to provide a cord lock of novel spring design.

It is a further object of the present invention to reduce the weight of the cord lock compared to comparably sized prior art constructions.

It is a further object of the present invention to provide a cord lock which is readily molded, of a practical and efficient design, and yet safe and reliable in use.

The cord lock of the present invention is a two-piece plastic construction, namely a one-piece molded plastic housing and a one-piece molded plastic plunger formed with a coiled spring integrally molded therewith and depending therefrom. The integral spring is molded with an axial bore, and the length of the uncompressed spring may be less than the length of the plunger portion in the housing when the spring is compressed, and the spring exhibits sufficient locking force on a cord locked between the plunger and the housing.

Brief Description of the Drawings

Fig. 1 - is an exploded view of the cord lock;

Fig. 2 - is a top plan partial fragmentary view of the cord lock;

Fig. 3 - is a sectional view taken along line 3-3 of Fig. 2;

Fig. 4 - is a sectional view taken along line 4-4 of Fig. 3;

Fig. 5 - is a sectional view as in Fig. 3 but showing the cord in the locked position;

Fig. 6 - is a top plan view of an alternate housing.

## Description of the preferred Embodiments

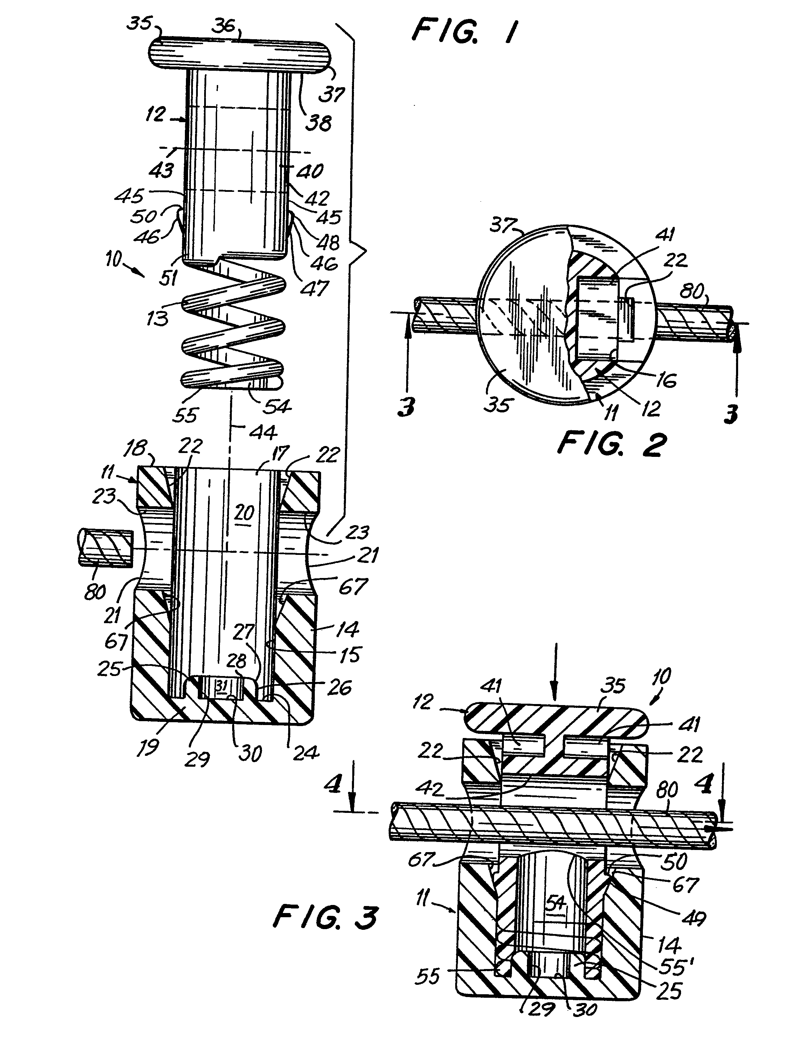

Referring to Figs. 1 - 5, there is shown a cord lock of the present invention generally referred to as 10. Cord lock 10 is formed of only two molded plastic parts, namely housing 11 and plunger 12 integrally formed with coiled spring 13.

Housing 11 is formed with a cylindrical wall 14, an inner part-cylindrical surface 15 with opposed chordal flats 16, an open end 17 with top annular edge 18, and a bottom wall 19, forming a cup or recess 20. A pair of coaxial transverse through holes 21 are formed in wall 14, for purposes hereinafter appearing. Each chordal flat 16 is formed with a tapered wall recess or surface 22 which extends from top edge 18 downwards to cylindrical surface 23. Surface 23 forms through hole 21. Second tapered recesses 67 are formed in flats 15 below cylindrical surface 23 for purposes hereinafter appearing.

Bottom wall 19 is formed with inside bottom surface 24. An upstanding cylindrical member 25 extends upwardly from surface 24, and is formed with outer surface 26, curved edge 27, top edge 28, and inner cylindrical wall 29. Bottom wall portion 30 in combination with wall 29 form recess 31.

Plunger 12 is formed with an outwardly extending top portion 35 which has a circular top surface 36 which is pressingly engaged by the user's finger in depressing plunger 12 in housing 11. Top portion 35 is formed with a rounded side edge 37 and bottom wall portion 38. Part-cylindrical body 40 is formed with oppositely disposed recesses 41. A circular cross bore 42 is formed in body 40, and the axis 43 of cross bore 42 intersects the axis 44 of body 40 and housing 11. Cross bore 42 is of similar diameter to that of housing through holes 21.

Part-cylindrical body 40 is formed with oppositely disposed chordal flats 45. Outwardly extending oppositely disposed ears 46 are disposed on chordal flats 45. Each ear 46 is formed with an upwardly tapered face 47, a flat side wall 48, rounded edge 49 and upper wall 50.

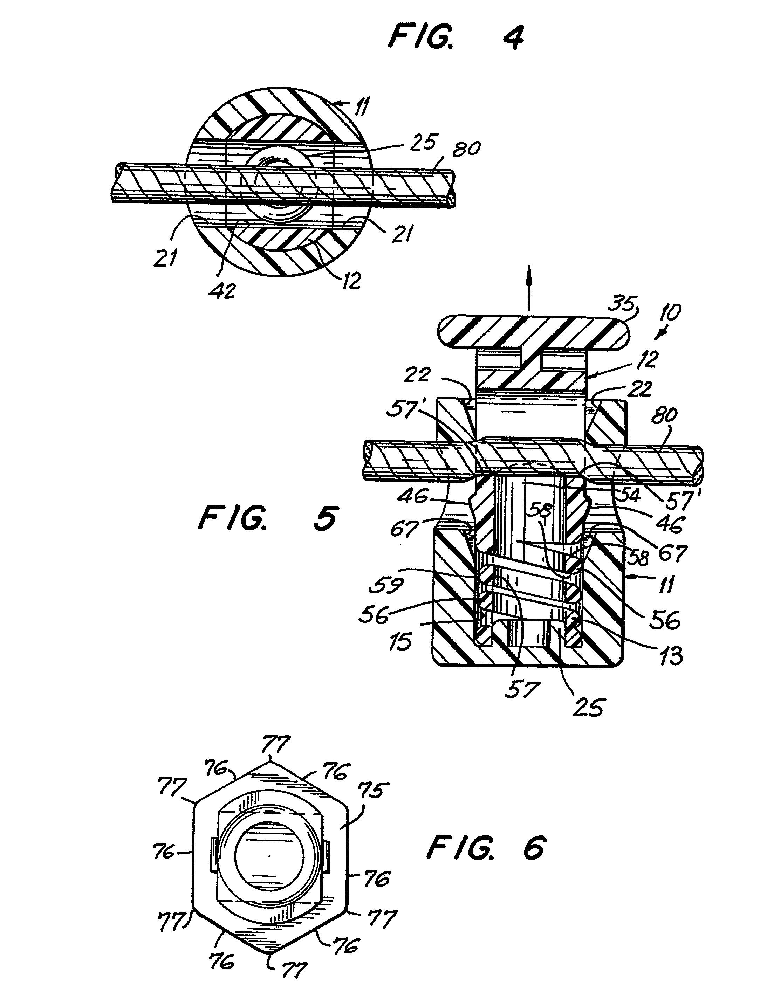

Lower portion 51 of body 40 is integrally molded with coiled spring 13. Spring 13 is of 12-pitch, and surprisingly is of a lesser length, in the uncompressed state, than body 40 which resides in housing 11 with the spring 13 compressed. Spring 13 is molded with an axial cylindrical bore 54 which extends from the bottom 55 of spring 13 through 57 to cylindrical surface 23 which forms cross bore 42, so that bore 42 and bore 54 are contiguous at 55. The cross section 56 of spring 13 is formed of inner flat wall 57, parallel flat walls 58, and outside curvilinear wall 59 (Fig. 5). Wall 57, in part, forms axial bore 54. The contiguous character of axial bore 54 and cross bore 42 greatly reduces the weight of the construction.

It is important to note that the aforesaid spring construction provides exceptional spring characteristics for a relatively short length of spring, and yet, by virtue of the cross bores 54 and 42, is readily moldable as an integral part of the plunger.

To assemble the plunger and housing, one merely aligns plunger ears 46 with housing tapered surfaces 22 at the respective chordal flats, and presses top 35 of the plunger 12. Ears 46 slidably engage tapered surfaces 22 until the ears 46 snap into and against surface edge 23. Spring end 54 slidably seats on member 25. Once assembled, the cord lock 10 is operated by depressing plunger 12 and compressing spring 13 until through holes 21 generally align with cross bore 42 (Fig.3). In bore alignment, ears 46 reside in recesses 67. A cord or like filament 80 is then inserted through the cross bore 42 and through holes 21, and the plunger is released, so that spring 13 extends or expands to lock the cord 80 between the housing and plunger (Fig. 5).

Recesses 67 are tapered to readily receive ears 46. A core rod (not shown) with shallow tapered and rounded ears may be employed to mold recesses 67. After the housing is molded, the core rod is axially slidably removed, with core rod ears engaging the juncture of edge 23 and tapered surface 22 to slightly flex the housing. Another approach to facilitate the forming or molding of recesses 67 is to employ segmented mold rods, collapsible mold rods, or like molding means known in the art.

Referring now to Fig. 6, there is shown an alternate embodiment of the housing 75. Housing 75 is formed of a hexagonal outer wall of six similar flat sides 76 with with rounded corners 77. The remainder of the construction is similar to that of housing 11 in the embodiment of Figs. 1 - 5. It has been found that by providing this hexagonal construction, the strength of the housing is increased while permitting the cord lock to lie flat and not roll during both assembly and in use.

The specific example of the present invention as shown and described herein is for illustrative purposes only. Various changes in structure will no doubt occur to those skilled in the art, and will be understood as forming a part of the present invention insofar as they fall within the spirit and scope of the appended claims.

What is claimed is

1.  A cord lock comprising, a one-piece housing having an open end and an integral closed end, and being formed with an inner cylindrical surface forming a recess extending to the closed end, said housing having a pair of transversely disposed coaxial openings for receiving a cord or the like, and an integrally molded resilient material one-piece plunger being axially disposed in said cylindrical recess, and comprising a coiled spring integrally formed of said resilient material and being disposed at the bottom of the plunger so as to contactingly engage the closed end of the housing, said plunger being formed with a transversely disposed cross bore, whereby with depression of the plunger in the housing the cross bore is aligned with housing openings to receive a cord, and with release of the plunger the cord is locked between the plunger and housing.

2.  The cord lock of claim 1, said cord lock consisting only of said one-piece housing and said one-piece plunger.

3.  The cord lock of claim 1, wherein the periphery of the cross-section of the coiled spring comprises a plurality of straight portions and a curvilinear portion.

4.  The cord lock of claim 1, wherein the length of the coiled spring in the uncompressed state is less than the length of the plunger portion that resides in the housing when the plunger is depressed and the spring is compressed.

5. The cord lock of claim 1, said plunger spring being formed with an axially disposed cylindrical bore.

6. The cord lock of claim 5, wherein the plunger axial cylindrical bore is contiguous with the cross bore, and the axes of the plunger bores intersect.

7. The cord lock of claim 6, wherein the periphery of the cross-section of the coiled spring comprises a plurality of straight portions and a curvilinear portion.

8. The cord lock of claim 7, wherein one straight side of the spring forms the axial cylindrical bore.

9. The cord lock of claim 1, said housing inner surface being part-cylindrical and said plunger being part-cylindrical, said plunger comprising a pair of diametrically disposed radially extending ears, and said housing being formed with tapered surfaces for slidably engaging said ears, said tapered surfaces extending from the open end of the housing to said transverse openings, wherein the ears slidably engage said tapered surfaces so as to be disposed in said openings to hold said plunger in said housing.

10. The cord lock of claim 1, said plunger spring being formed with an axially disposed cylindrical bore, wherein the periphery of the cross-section of the coiled spring comprises a plurality of straight portions and a curvilinear portion, wherein one straight side of the spring cross-section forms the periphery axial cylindrical bore.

11. The cord lock of claim 10, said housing bottom wall comprising an upstanding cylindrical portion for slidably receiving the axial spring along the axial cylindrical bore.

12. The cord lock of claim 1, said spring comprising at least a 12-pitch spring.

13. The cord lock of claim 1, said cord lock consisting only of a one-piece integrally molded housing and a one-piece integrally molded plunger, and wherein the entire cord lock is of molded plastic.

14. The cord lock of claim 1, wherein the exterior surface of the housing comprises at least one flat wall.

15. The cord lock of claim 14, wherein the outside of the housing comprises a generally hexagonal periphery.

16. The cord lock of claim 1, said plunger comprising oppositely disposed ears disposed below said cross bore, and said housing being formed with facingly disposed tapered recesses extending from the open end to the transverse openings for receiving said ears so that in assembly, the ears slidably engage the tapered recesses and snap into the transverse openings, and said housing further comprising a second pair of facingly disposed recesses extending from and below the transverse housing openings, for receiving the ears upon compression of the spring in the housing.

FIG. 1

FIG. 2

FIG. 3

FIG. 4

FIG. 5

FIG. 6